# EUROPEAN PATENT APPLICATION

(11) **EP 2 487 563 A2**
(43) Date of publication of application: **15.08.2012**
(21) Application number: 11194270.2
(22) Date of filing: 19.12.2011
(51) Int. Cl.: G06F 3/033

(54) **Systems and methods for providing geographically distributed creative design**

(30) Priority: 20.12.2010 US 973544
(71) Applicant: Northrup Grumman Corporation, Los Angeles, CA 90067 (US)
(72) Inventor: Hsu, Shi-Ping, Pasadena, CA California 91107 (US); Siegel, Neil G., Rolling Hills Estates, CA California 90274 (US); Ferren, Bran, Glendale, CA California 91201 (US); Hillis, W. Daniel, Encino, CA California 91316 (US)
(74) Representative: Martin, Philip John

(57) **Abstract**

Systems and methods for providing geographically distributed creative design are disclosed. In one embodiment, a system is provided for providing directional audio in a video teleconference meeting. The system comprises a high resolution display, an interactive stylus and a plurality of sensors that track movement of the interactive stylus over the high resolution display. A creative design controller is configured to display detailed text and figures and display sketches of context in response to movement of the interactive stylus over the high resolution display.

## Description

### FIELD OF INVENTION

The present invention relates generally to video teleconferencing, and more particularly to systems and methods for providing geographically distributed creative design.

### BACKGROUND TO THE INVENTION

Video teleconference systems (VTCs) are used to connect meeting participants from one or more remote sites. This allows for many participants to review material and collaborate on the material across a geographically distributed area. VTCs are a useful tool for supporting geographically distributed review of engineering designs and artifacts. There are many network based tools, such as GoToMeeting, WebEx and many others, that are useful tools for supporting geographically distributed review of engineering designs and artifacts. However, these tools are ineffective for supporting geographically distributed creation of engineering artifacts and design.

### SUMMARY OF THE INVENTION

In one aspect of the invention, a system is disclosed for providing creative design. The system comprises a high resolution display, an interactive stylus and a plurality of sensors that track movement of the interactive stylus over the high resolution display. A creative design controller is configured to display detailed text and figures and display sketches of context in response to movement of the interactive stylus over the high resolution display.

We also describe a system for providing geographically distributed creative design is disclosed. The system comprises a plurality of creative design system coupled together over a network. Each of the plurality of creative design systems comprise a high resolution display, an interactive stylus, a plurality of sensors that track movement of the interactive stylus over the high resolution display and a creative design controller configured to display preloaded detailed text and figures and generate instructions to display sketches of context in response to movement of the interactive stylus over the high resolution display.

In a further aspect of the present invention, a method is disclosed for providing geographically distributed creative design. The method comprises preloading detailed text and figures to be displayed on a high resolution display of a local creative design system, tracking movement of an interactive stylus over the high resolution display and generating instructions to display sketches of context in response to movement of the interactive stylus over the high resolution display.

### BRIEF DESCRIPTION OF THE DRAWINGS

FIG. 1 illustrates a block diagram of network coupled system for providing geographically distributed creative design in accordance with an aspect of the present invention.
FIG. 2 illustrates a block diagram of a creative design controller in accordance with an aspect of the present invention.
FIG. 3 illustrates a portion of a creative design system in accordance with an aspect of the present invention.
FIG. 4 illustrates a sketched flow diagram by a user on a high resolution display of a creative design system in accordance with an aspect of the present invention.
FIG. 5 illustrates an organized sketched flow diagram of FIG. 4 after the sketched flow diagram has been reorganized by the design organizer tool in accordance with an aspect of the present invention.
FIG. 6 illustrates an individual user input screen of a collaborative polling tool in accordance with an aspect of the present invention.
FIG. 7 illustrates a group average results ranking output screen of the collaborative polling tool in accordance with an aspect of the present invention.
FIG. 8 illustrates Jane's individual user input screen of the collaborative polling tool in accordance with an aspect of the present invention.
FIG. 9 illustrates John's individual user input screen of the collaborative polling tool in accordance with an aspect of the present invention.
FIG. 10 illustrates a group average results ranking output screen for the four plans of the collaborative polling tool in accordance with an aspect of the present invention.
FIG. 11 illustrates a method for providing for providing geographically distributed creative design in accordance with an aspect of the present invention.
FIG. 12 illustrates an example of a computer system that can be employed to implement the systems and methods illustrated in FIGS. 1-11.

### DETAILED DESCRIPTION

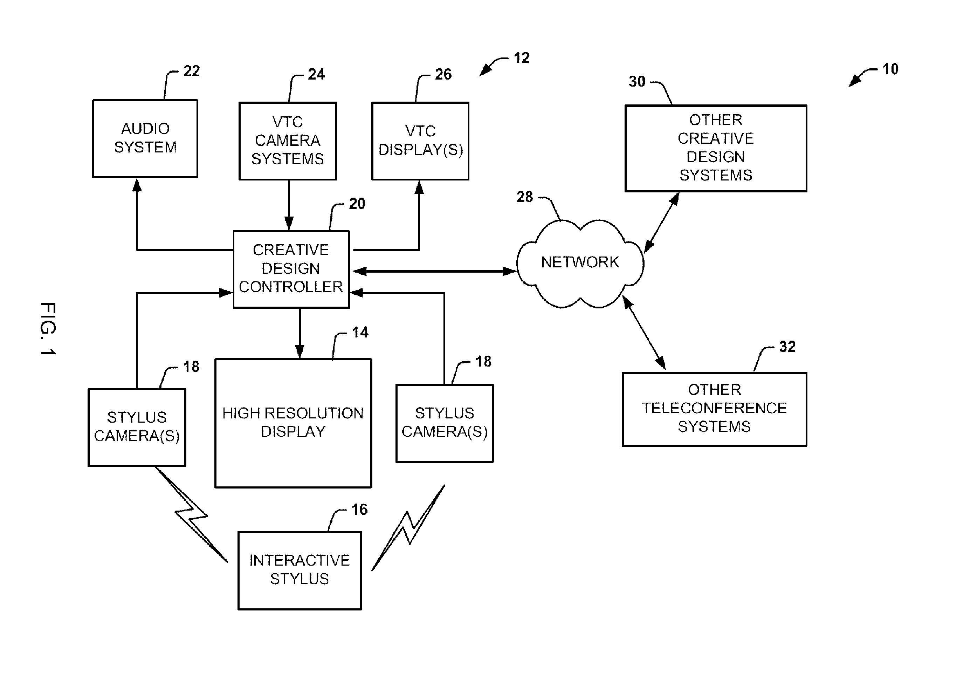

FIG. 1 illustrates a network coupled system 10 for providing geographically distributed creative designs in accordance with an aspect of the present invention. The system 10 includes a local creative design system 12 coupled to one or more other creative design systems 30 through a communication medium 28. The communication medium 28 can be a local-area or wide-area network (wired or wireless), or a mixture of such mechanisms, which provides one or more communication mechanisms (*e.g*., paths and protocols) to pass data and/or control between creative design systems 30 and other video teleconferencing systems 32 that do not have the functionality associated with a creative design system.

The local creative design system 12 includes a high resolution display 14 (e.g., greater than or equal to 8 Megapixels) that is sufficient to provide for the display of detail text and figures viewable within a teleconference room setting. The high resolution display 14, stylus sensors 18, an interactive stylus 16 and a creative design controller 20 cooperate to allow for a user (e.g., a design engineer) to sketch creative designs on the high resolution display 14 similar to how users sketch creative designs on a large white board. The creative designs appear in the form of images on the high resolution display 14 and provide the context necessary for a creative design meeting. The detail text and figures can be preloaded onto the high resolution display 14 prior to a creative design session. Changes in the sketched images due to actions by a user are employed to create message instructions that can be transmitted to other creative design systems 30 to update high resolution displays associated with each of the other creative design systems 30. In this manner, updates to images on each respective high resolution display occur substantially in real-time to provide substantially real-time sketching since the amount of data transferred over the communication medium 28 is a fraction of the amount of data that would be required to completely update each high resolution display.

Movement of the interactive stylus 16 is tracked by the stylus sensors 18 and transmitted to the creative design controller 20. The creative design controller 20 analyzes the images of the movement of the stylus 16 and automatically generates markings on the high resolution display 14 in response to sketching by a user. Since the markings are generated by the controller 20, the markings can have a preprogrammed width that can be as small as 1 pixel wide allowing for complex detailed sketches and as thick as would be reasonable for sketching drawings on a high resolution display. The interactive stylus 16 can include a transmitter located at an end point of the interactive stylus and the stylus sensors 18 can monitor the movement of the transmitter to determine when to display sketched images in response to sketches by a user on the high resolution display 14. For example, based on how close an end tip of the stylus 16 is to the high resolution display 14. In accordance with an aspect of the invention, the interactive stylus 16 can have an end that includes an infrared transmitter and the stylus sensors 18 can be infrared cameras. However, it is to be appreciated that the transmitter end could transmit visible light, radio frequency signals or other signals that can be tracked by different types of stylus sensors.

The local creative design system 12 can include one or more video teleconferencing cameras 24 for capturing images of participants at the local location of the video teleconference meeting where the high resolution display 14 resides and transmitting those images to other remote creative design systems 30 and other remote teleconference systems 32. The local creative design system 12 can include one or more video teleconferencing (VTC) displays 26 for displaying participants from the other remote creative design systems 30 and other remote teleconference systems 32. Additionally, the local creative design system 12 can include an audio system 22 that may include one or more speakers for receiving audio data from the other remote creative design systems 30 and other remote teleconference systems 32 and providing voice sounds associated with the audio data. The audio system 22 can also include one or more microphones for capturing voice sounds of the participants at the local creative design location 12 and providing audio data produced by the voice sounds of the participants to be transmitted to the other remote creative design systems 30 and other remote teleconference systems 32.

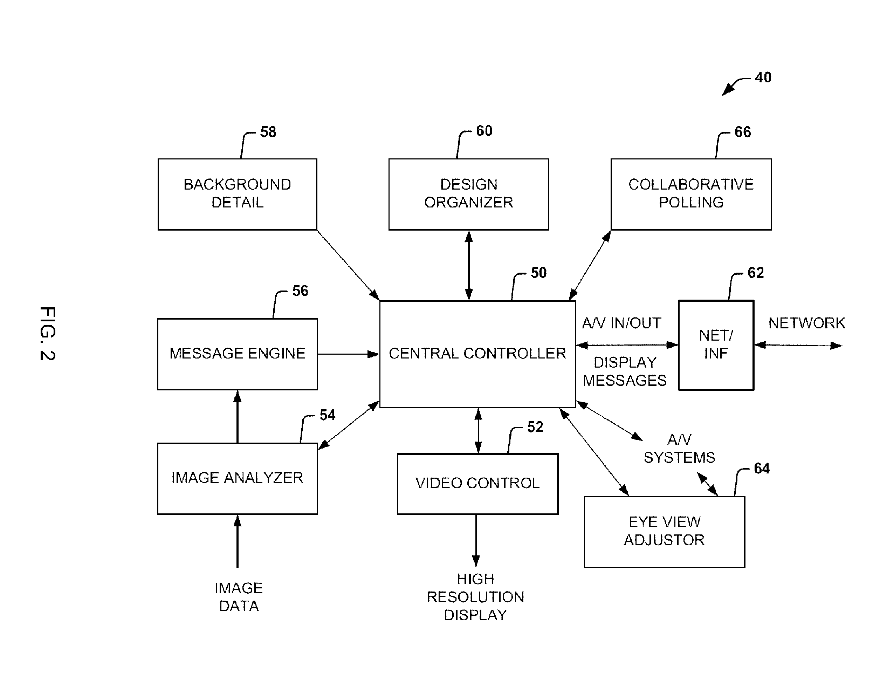

FIG. 2 illustrates a block diagram of a creative design controller 40 in accordance with an aspect of the present invention. The creative design controller 40 includes a central controller 50 that loads background detail 58, such as detailed text and figures viewable within a teleconference room setting onto the high resolution display via a video controller 52. The central controller 50 can be a central processor unit and associated hardware and software for performing functions of the central controller 50 of a conventional computer or teleconference system. The background detail 58 can be loaded from a memory associated with the creative design controller 40 or be received remotely through a network interface 62. The same background detail can be loaded and displayed at other creative design systems and/or video teleconference systems. An image analyzer 54 receives image data from the stylus sensors to determine changes in the movement location of the stylus. A message engine 56 receives the determine changes from the image analyzer 54 and generates instructions for instructing the video controller 52 to draw sketches on the high resolution display based on the movement of the interactive stylus relative to the high resolution display. The generated instruction are provided to the central controller 50 which then provides instructions to the video controller 52 to draw sketches on the high resolution display based on the movement of the interactive stylus relative to the high resolution display. The central controller 50 also packetizes these instructions to be sent to one or more other creative design systems over a network via the network interface 62 so that high resolution displays at the other creative design systems can display and update the drawn sketches.

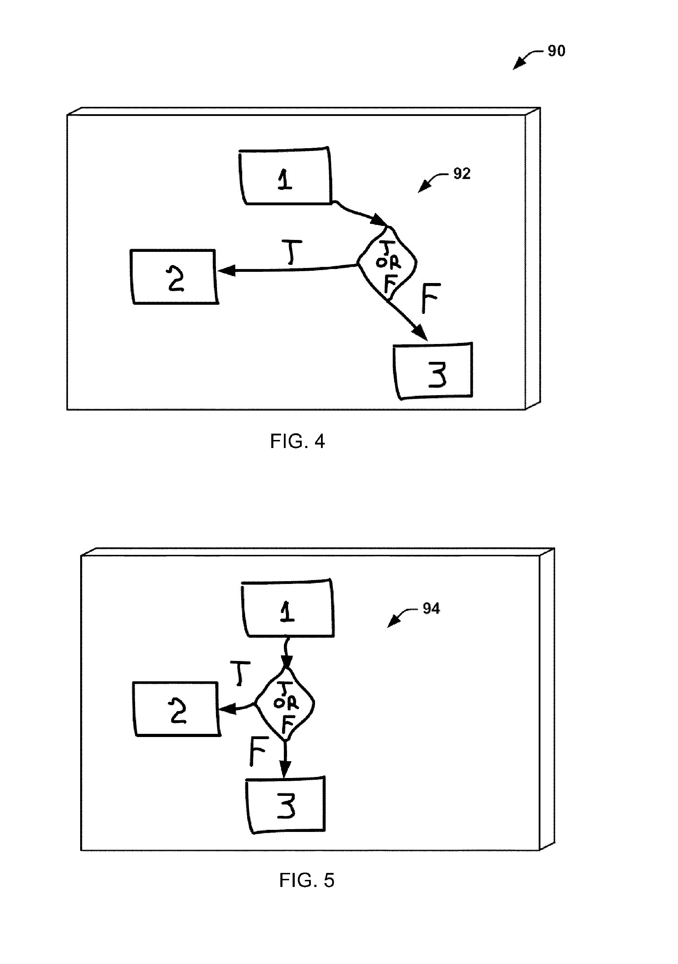

The creative design controller 40 also can include a design organizer tool 60. The design organizer tool 60 will render sketched designs by users into an organized sketch. FIG. 4 illustrates a sketched flow diagram 92 by a user on a high resolution display 90 of a creative design system. FIG. 5 illustrates an organized sketched flow diagram 94 of FIG. 4 after the sketched flow diagram 92 has been reorganized by the design organizer tool 60. The design organizer tool 60 can be a tool such as flying logic (see www.flyinglogic.com) or a tool referred to as "clean up your mess". The design organizer tool 60 auto-arranges boxes and lines and also auto-captures these ideas in a computer storable and editable format (e.g., replaces hand-drawn boxes, diamonds, and circle shapes with computer-drawing ones, and replaces hand-lettered text with computerized type-written text). The design organizer tool 60 automatically rearranges the sketch designs upon completion of each portion of the design or after completion of the sketch design in response to a user's command.

The central controller 50 also receives audio and video data from other creative design systems and other teleconference systems and provides that data to the audio and video systems of the local creative design system to provide voice sounds and video of participants of the creative design meeting. Furthermore, the central controller 50 transmits audio and video data of participants of the creative design meeting at the local creative design system to other remote creative design systems and other teleconference systems. In an aspect of the invention, the creative design controller includes an eye view adjustor component 64. The eye view adjustor component 64 analyzes images from two or more cameras that are angled toward a user so that an image can be generated and transmitted to displays of other creative design systems and other teleconference systems so that it appears to remote participants that the user is looking straight into the eye of the remote participants when the user is looking toward the high resolution display.

In another aspect of the invention, a forty-degree angled mirror (50% reflective and 50% transmissive) can be placed in front of a video teleconference display with a video teleconference camera being located to capture images of the mirror at a ninety degree angle relative to the position of the user. This provides the appearance of the user is looking straight into the eye of the remote participants when the user turns toward the video teleconference display.

The creative design controller 40 also can include a collaborative polling tool 66. The collaborative polling tool 66 provides an input screen to individual user to allows users to weight parameters and assign scores associated with prospective decision selections. The collaborative polling tool 66 also provides for a group output screen that displays weight parameter averages and averages scores of a group of users for each of the prospective decision selections. This allows users to receive feedback from the group associated with the teleconference meeting and determine areas of agreement and disagreement to allow for further time concentrating on areas of disagreement.

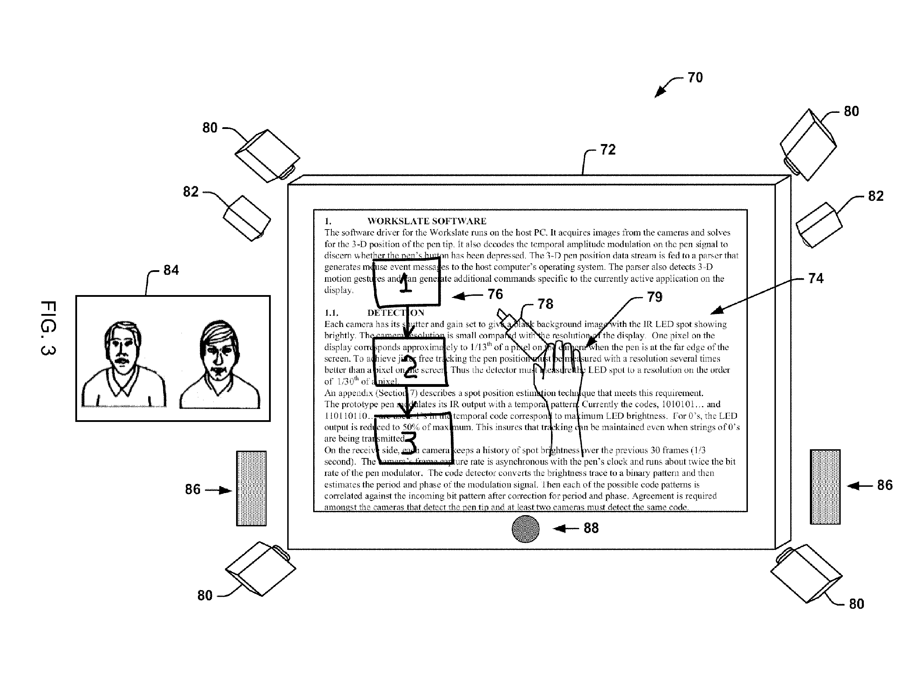

FIG. 3 illustrates a portion of a creative design system 70 in accordance with an aspect of the present invention. The system 70 includes a high resolution display 72 (e.g., greater than or equal to 8 Megapixels) that provides for the display of detail text and figures 74 viewable within a teleconference room setting. The system includes four stylus sensors 80 in the form of cameras located at each corner of the display 72. The cameras 80 track the movement of an interactive stylus 78 employed by a user to allow for a user (e.g., a design engineer) to sketch creative designs 76 on the high resolution display 72 similar to how users sketch creative designs on a large white board. The movement of the interactive stylus 78 can be tracked by employing triangulation utilizing two cameras. Although only two cameras are necessary to track movement of the stylus 78, two additional cameras can be employed to track the stylus 78 when a user' hand 79 blocks the stylus 78 from one or two of the cameras 80 while sketching creative designs on the display 72. Although the cameras 80 are illustrated as being mounted outside the display 72, the cameras 80 can be fabricated into an outer frame of the display 72. As illustrated in FIG. 3, high resolution detailed text 74 is displayed on the display 72, while a user has sketched a flow diagram 76 on the display such that both detail and context can be provided on the high resolution display 72.

The creative design system 70 can include two video teleconferencing cameras 82 for capturing images of the user at the local location of the video teleconference meeting where the high resolution display 72 resides and transmitting those images to other remote creative design systems and other remote teleconference systems. The two cameras 82 can be angled toward the user so that an image can be generated and transmitted to displays of other creative design systems and other teleconference systems so that it appears to remote participants that the user is looking straight into the eye of the remote participants when the user is looking toward the high resolution display 72.

The creative design system 70 also includes a video teleconferencing (VTC) display 84 for displaying participants from the other remote creative design systems and other remote teleconference systems. Additionally, the creative design system 70 includes an audio system with a pair of speakers 86 for receiving audio data from the other remote creative design systems and other remote teleconference systems and providing voice sounds associated with the audio data. The audio system includes a microphone 88 for capturing voice sounds of the participants at the creative design system location and providing audio data produced by the voice sounds of the participants to be transmitted to other remote creative design systems and other remote teleconference systems.

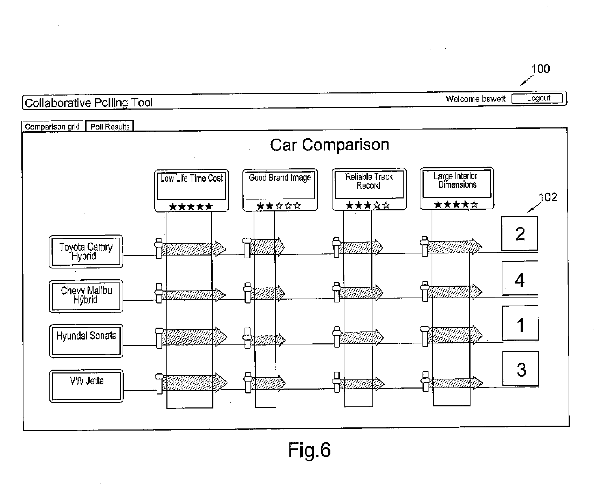

FIG. 6 illustrates an individual user input screen 100 of a collaborative polling tool in accordance with an aspect of the present invention. The example illustrated in FIG. 6 relates to selection of a car by comparing four cars to four different parameters. The four parameters are: "Low Life Time Cost", "Good Brand Image", "Reliability Track Record" and "Larger Interior Dimensions". The four cars are: "Toyota Camry Hybrid", "Chevy Malibu Hybrid", "Hyundai Sonata" and "VW Jetta". An individual user ranks the importance of the different parameters to the individual user by selecting a number of stars to that parameter based on the importance of that respective parameter to the individual user. The number of stars assigns an associated weight factor to that parameter. An individual user can then rank each parameter associated with each respective car employing vertical sliders, for example, that rank the parameter associated with that respective car on a scale from 1 to 10. The ranking can be based on actual ranking number or based on perception of an individual user or a group of individual users. In the example, the "Hyundai Sonata" and the "VW Jetta" were given a score of 10 based on having a low life time cost, while the "Chevy Malibu Hybrid" was given a score of a 6 based on a high life time cost. The "Toyota Camry Hybrid" was given a score of a 8 based on having a life time cost in between the other cars. The interaction (multiplication) of weights and scores for each car and parameter can be given a value and added up to provide an aggregate score for each car. The aggregate scores can be employed to provide a ranking 102 for each car.

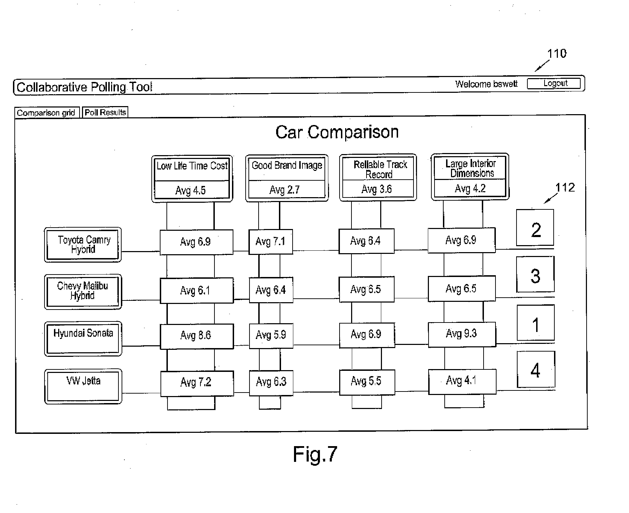

FIG. 7 illustrates a group average results ranking output screen 110 of the collaborative polling tool in accordance with an aspect of the present invention. The group average ranking output screen provides averages of each of the rankings provided by each of the individual users that provide inputs to the individual user input screen example illustrated in FIG. 6. As illustrated in FIG. 7, both the average weights and the average scores are determined and the interaction (multiplication) of the average weights and average scores for each car and parameter can be given a value and added up to provide an aggregate score for each car. The aggregate scores can be employed to provide a ranking 112 for each car by the group of individual users. In this manner, a user can be provided real time feedback from the group and determine whether the group is in agreement or disagreement with the user.

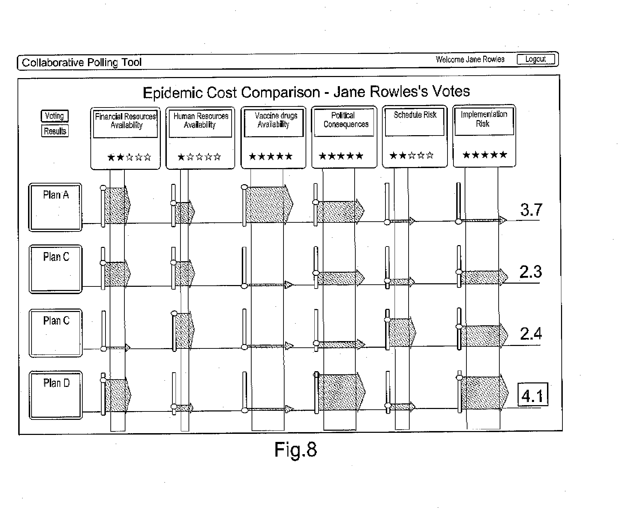

It is to be appreciated that the Collaborative polling tool can be web-based, such that participants can vote from anywhere. FIGS. 8-10 illustrate another example employing the collaborative polling tool. In the attached example, Jane, John along with a group of public health decision makers are deciding which one of the four plans is the best to fight an epidemic. Some of the plans cost too much. Others are not good enough. The participants also need to weigh other factors, such as political considerations, resource concerns, etc.

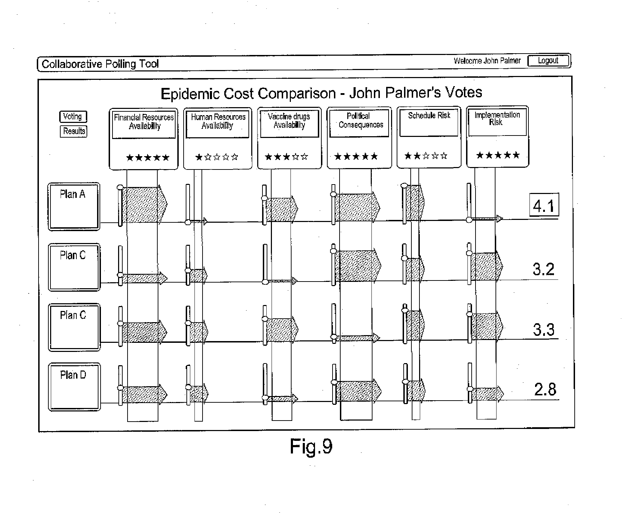

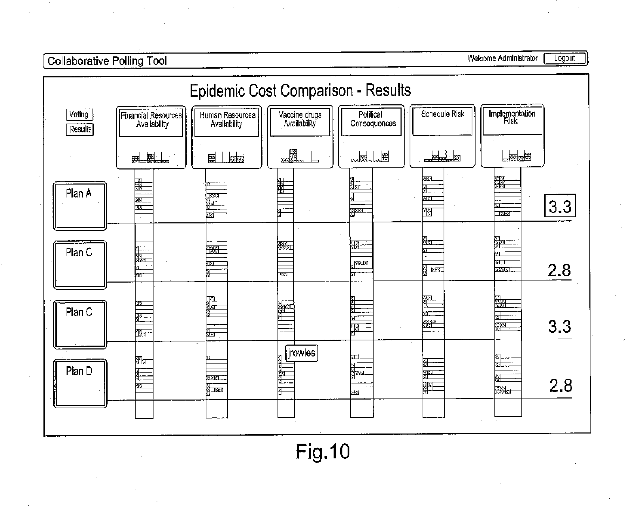

FIG. 8 illustrates Jane's individual user input screen of the collaborative polling tool in accordance with an aspect of the present invention. The stars on the top are her weighting factors for the criteria. The slider for each element is her vote for the particular element. Based on her considerations, plan D is her favorite. FIG. 9 illustrates John's individual user input screen of the collaborative polling tool in accordance with an aspect of the present invention. Plan A is his favorite. FIG. 10 illustrates a group average results ranking output screen for the four plans of the collaborative polling tool in accordance with an aspect of the present invention. The group average results screen shows the group results in real time. It instantly shows histogram of all the voting elements. Each small dark rectangle is a person's vote. When a user moves a mouse cursor over any rectangle, the rectangle turns white and shows the person's name and all other votes this person has cast. Under Plan B/vaccine, a bipolar situation can be seen. The group has strong opposite opinions on this issue. It is an area that is worth more attention and discussion. On the other hand, the group has a good consensus already on Plan C/vaccine.

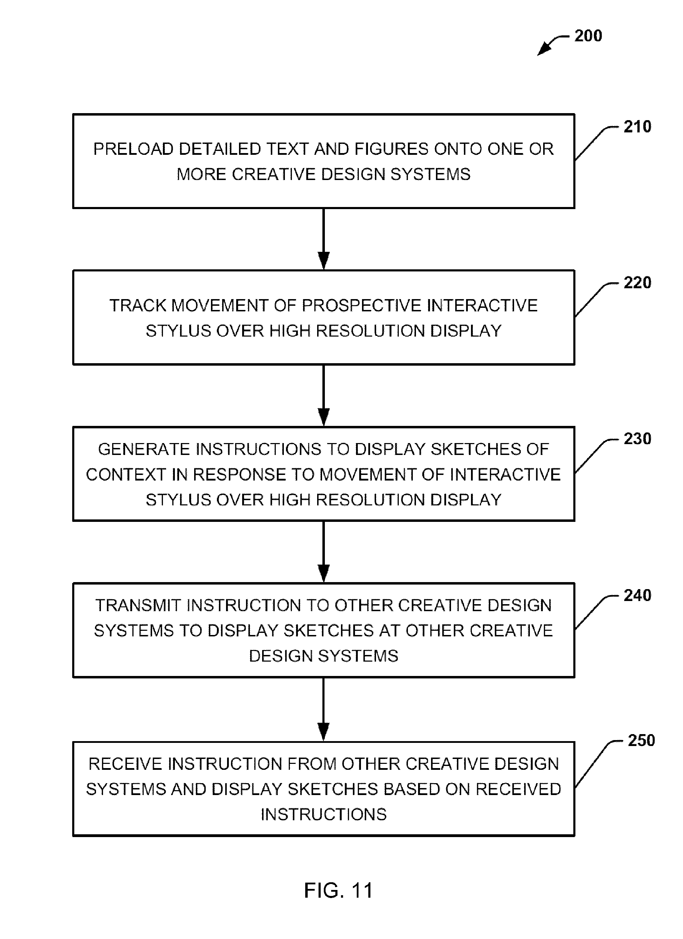

In view of the foregoing structural and functional features described above, a method will be better appreciated with reference to FIG. 11. It is to be understood and appreciated that the illustrated actions, in other embodiments, may occur in different orders and/or concurrently with other actions. Moreover, not all illustrated features may be required to implement a method. It is to be further understood that the following method can be implemented in hardware (*e.g*., a computer or a computer network as one or more integrated circuits or circuit boards containing one or more microprocessors), software (*e.g*., as executable instructions running on one or more processors of a computer system), or any combination thereof.

FIG. 11 illustrates a methodology 200 for providing geographically distributed creative design in accordance with an aspect of the present invention. The methodology begins at 210 where detailed text and figures are loaded and displayed at one or more creative design systems. At 220, movement of an associated interactive stylus is tracked over a high resolution display at each respective one or more creative design systems. At 230, instructions are generated to display sketches of context in response to the movement of an associated interactive stylus tracked over a high resolution display at each respective one or more creative design systems. At 240, the generated instructions are transmitted to other creative design systems to display sketches at the other creative design system. At 250, instructions are received from other creative design systems and sketches from the other creative design systems are displayed based on the received instructions.

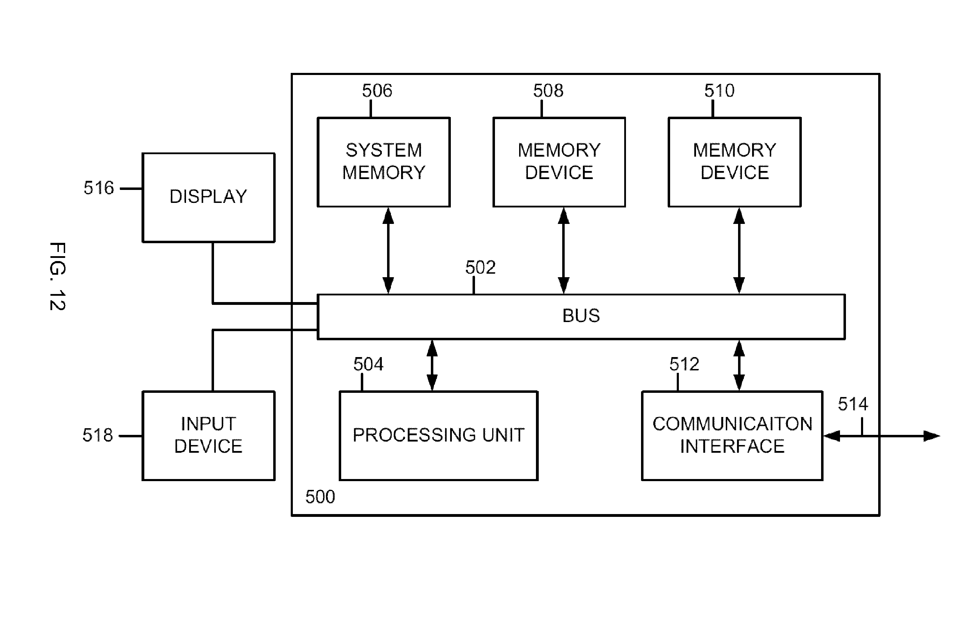

FIG. 12 is a schematic block diagram illustrating an exemplary computer system 500 of hardware components capable of implementing examples of the systems and methods disclosed in FIGS. 1-11, such as the creative design controller 20 illustrated in FIG. 1. The system 500 can include various systems and subsystems. The system 500 can be a personal computer, a laptop computer, a workstation, a computer system, an appliance, an application-specific integrated circuit (ASIC), a server, a server blade center, a server farm, etc. One of skill in the art will recognize other examples of electronic devices that can serve as the system 500.

The system 500 can includes a system bus 502, a processing unit 504, a system memory 506, memory devices 508 and 510, a communication interface 512 (e.g., a network interface), a communication link 514, a display 516 (e.g., a video screen), and an input device 518 (e.g., a keyboard and/or a mouse). The system bus 502 can be in communication with the processing unit 504 and the system memory 506. The additional memory devices 508 and 510, such as a hard disk drive, server, stand alone database, or other non-volatile memory, can also be in communication with the system bus 502. The system bus 502 operably interconnects the processing unit 504, the memory devices 506-510, the communication interface 512, the display 516, and the input device 518. In some examples, the system bus 502 also operably interconnects an additional port (not shown), such as a universal serial bus (USB) port.

The processing unit 504 can be a computing device well-known to those in the art and can include an application-specific integrated circuit (ASIC). The processing unit 504 executes a set of instructions to implement the operations of examples disclosed herein. The processing unit can include a processing core. The additional memory devices 506, 508 and 510 can store data, programs, instructions, database queries in text or compiled form, and any other information that can be needed to operate a computer. The memories 506, 508 and 510 can be implemented as computer-readable media (integrated or removable) such as a memory card, disk drive, compact disk (CD), or server accessible over a network. In certain examples, the memories 506, 508 and 510 can comprise text, images, video, and/or audio, portions of which can be available in different human. The processing unit 504 executes one or more computer executable instructions originating from the system memory 506 and the memory devices 508 and 510. The term "computer readable medium" as used herein refers to a medium that participates in providing instructions to the processing unit 504 for execution.

What have been described above are examples of the present invention. It is, of course, not possible to describe every conceivable combination of components or methodologies for purposes of describing the present invention, but one of ordinary skill in the art will recognize that many further combinations and permutations of the present invention are possible. Accordingly, the present invention is intended to embrace all such alterations, modifications and variations that fall within the scope of the appended claims.

## Claims

1. A system for providing creative design, the system comprising:
a high resolution display;
an interactive stylus;
a plurality of sensors that track movement of the interactive stylus over the high resolution display; and
a creative design controller configured to display detailed text and figures and display sketches of context in response to movement of the interactive stylus over the high resolution display.

2. The system of claim 1, wherein the system is located at a local location and coupled to one or more remotely located creative design systems and/or remotely located teleconference systems over a network.

3. The system of claim 2, further comprising at least one video teleconference camera for capturing images of participants at the local location and transmitting those captured images to the one or more remotely located creative design systems and/or remotely located teleconference systems and at least one microphone for capturing voice sounds at the local location and providing audio data produced by the voice sounds to the one or more remotely located creative design systems and/or remotely located teleconference systems.

4. The system of claim 3, wherein the at least one video teleconference camera comprises at least two cameras angled toward a position of a user of the interactive stylus so that an image can be generated and transmitted to the one or more remotely located creative design systems and/or remotely located teleconference systems, so that it appears that the user is looking straight into the eye of remotely located participants when the user is looking toward the high resolution display.

5. The system of claim 2, 3 or 4, further comprising at least one video teleconference display for displaying participants from the one or more remotely located creative design systems and/or remotely located teleconference systems and at least one speaker for receiving audio data from the one or more remotely located creative design systems and/or remotely located teleconference systems and providing voice sounds associated with the audio data.

6. The system of claim 5, further comprising a forty-five degree angled mirror placed in front of the at least one video teleconference display and a video teleconference camera located to capture images of the mirror at a ninety degree angle relative to the position of a user of the interactive stylus to provide the appearance that the user is looking straight into the eye of remote participants when the user is looking toward the video teleconference display.

7. The system of any preceding claim, wherein the stylus sensors are cameras and the interactive stylus includes a transmitter located and an end point of the interactive stylus and the cameras monitor movement of the transmitter to determine when to display sketched images in response to sketches by a user on the high resolution display.

8. The system of any preceding claim, wherein the creative design controller preloads and displays the detailed text and figures on the high resolution display and the creative design controller further comprises an image analyzer that analyzes image data from the stylus sensors to determine movement of the stylus sensor and a message engine that receives the determined changes and generates instruction for instructing a video controller to draw sketches on the high resolution display based on movement of the interactive stylus over the display.

9. The system of claim 8, wherein the creative design controller further comprises a central controller that packetizes the generated instructions and transmits the packetized instructions to at least one remote creative design system for displaying the drawn sketched on at least one remote high resolution display.

10. The system of any preceding claim, wherein the creative design controller further comprises a design organizer tool that automatically renders a sketched design into an organized sketch.

11. The system of any preceding claim, wherein the creative design controller further comprises a collaborative polling tool that allows users to weight parameters and assign scores associated with prospective decision selections to determine an individual user ranking and display average weight parameters and average scores of a group of users to determine a group decision selection ranking.

12. A method for providing geographically distributed creative design, the method comprising:
preloading detailed text and figures to be displayed on a high resolution display of a local creative design system;
tracking movement of an interactive stylus over the high resolution display; and
generating instructions to display sketches of context in response to movement of the interactive stylus over the high resolution display.

13. The method of claim 12, further comprising transmitting the generated instructions to at least one other creative design system to display the sketches of context on a high resolution display of the at least one other given creative design system and receiving instructions to display context from the at least one other creative design systems on the high resolution display of the local creative design system, the generated instructions being only associated with updates of displayed sketches.

14. The method of claim 12 or 13, wherein tracking movement of an interactive stylus over the high resolution display comprises capturing and analyzing images of the movement of the interactive stylus over the high resolution display.

15. The method of any one of claims 12 to 14, further comprising automatically rendering a sketched design into an organized sketch.

16. The method of any one of claims 12 to 15, further comprising providing an individual user input screen of a collaborative polling tool on the high resolution display to allow a user to weight parameters and assign scores associated with prospective decision selections to determine an individual user ranking and displaying a group output screen of weight parameter averages and averages scores of a group of users to determine a group decision selection ranking.
